Europäisches Patentamt

European Patent Office

Office européen des brevets

(19)

(11) Veröffentlichungsnummer: **0 305 767**
**A2**

(12) **EUROPÄISCHE PATENTANMELDUNG**

(21) Anmeldenummer: 88112821.9

(51) Int. Cl.⁴: **B23Q 1/28**

(22) Anmeldetag: 05.08.88

| | |
|---|---|
| Die Bezeichnung der Erfindung wurde geändert (Richtlinien für die Prüfung im EPA, A-III, 7.3). | (71) Anmelder: **WEILER GMBH & CO. KG**<br>**Würzburger Strasse 17**<br>**D-8522 Herzogenaurach(DE)** |
| (30) Priorität: 06.08.87 DE 3726174 | (72) Erfinder: **Siegfried, Werner**<br>**-Sonnenstrasse 9**<br>**D-8802 Sachsen(DE)**<br>Erfinder: **Czech, Erwin**<br>**Ballmannsdorf 3**<br>**D-8814 Lichtenau(DE)** |
| (43) Veröffentlichungstag der Anmeldung:<br>**08.03.89 Patentblatt 89/10** | |
| (84) Benannte Vertragsstaaten:<br>**AT CH DE ES FR GB IT LI SE** | (74) Vertreter: **Popp, Eugen, Dr. et al**<br>**MEISSNER, BOLTE & PARTNER**<br>**Widenmayerstrasse 48 Postfach 86 06 24**<br>**D-8000 München 86(DE)** |

(54) **Klemmvorrichtung für einen Schlitten einer Werkzeugmaschine.**

(57) Vorrichtung zur klemmenden Fixierung eines in einer Werkzeugmaschine längsverschiebbar gelagerten Schlittens (insbesondere Reitstocks (10) einer Drehmaschine), an einer vorgegebenen Position, wobei dem Schlitten (10) zwei diametral wirksame Klemmbacken (15, 16) zugeordnet sind, zwischen denen sich eine parallel zum Linearlager bzw. zur Linearführung (12) erstreckende Klemmleiste (14) hindurcherstreckt.

Fig. 1

EP 0 305 767 A2

# Vorrichtung zur klemmenden Fixierung eines in einer Werkzeugmaschine längsverschiebbar gelagerten Schlittens, insbesondere Reitstocks einer Drehmaschine

Die Erfindung betrifft eine Vorrichtung zur klemmenden Fixierung eines in einer Werkzeugmaschine längsverschiebbar gelagerten Schlittens, insbesondere Reitstocks einer Drehmaschine, an einer vorgegebenen Position.

Derartige Vorrichtungen sind allgemein bekannt. Bei herkömmlichen Konstruktionen wird der Schlitten mittels einseitig wirkender Klemmorgane in seiner vorgegebenen Position fixiert. Diese Art der Fixierung ist bei kleineren Universal-Werkzeugmaschinen akzeptabel. Bei Hochpräzisions-Werkzeugmaschinen sowie bei Werkzeugmaschinen mit Kugel linearlagern für die translatorisch bewegbaren Schlitten ist die einseitige Klemmung derselben problematisch aufgrund der auf das Linearlager wirkenden Kräfte und Momente. Die Linearlager müssen aus diesem Grund größer und stärker dimensioniert werden als es für ihre eigentliche Lagerfunktion nötig wäre.

Der vorleigenden Erfinder liegt daher die Aufgabe zugrunde, eine Vorrichtung der eingangs genannten Art so weiterzubilden, daß auch in Klemmstellung die Linearlager frei sind von Klemmkräften und -momenten.

Diese Aufgabe wird in überraschend einfacher Weise durch die kennzeichnenden Merkmale des Anspruches 2 gelöst, wobei bevorzugte konstruktive Details in den Unteransprüchen beschrieben sind.

Durch die erfindungsgemäße Weiterbildung läßt sich erreichen, daß auch in Klemmstellung das Linearlager des Schlittens frei ist von Klemm- bzw. Feststellkräften. Dementsprechend können die Linearlager schwächer dimensioniert werden. Insbesondere macht sich dieser Vorteil bei den neuerdings verwendeten Kugellinearlagern bemerkbar. Durch die erfindungsgemäße Klemmvorrichtung bleiben die Linearlager auch in Klemmstellung nahezu unbelastet. Die Klemmkräfte werden ausschließlich in die den Klemmbacken zugeordneten Klemmleisten eingeleitet.

Von besonderer Bedeutung sind noch die Maßnahmen nach Anspruch 3 und/oder 4, da dadurch gewährleistet ist, daß in Klemmstellung die Klemmleiste durch die Klemmbacken diametral und jeweils mit gleicher Klemmkraft belastet ist. Der Kraftausgleich erfolgt über das zwischengeschaltete Vorspannelement, welches in Form einer Vorspannfeder oder einer Vorspann-Kolben-Zylinder-Einheit ausgebildet sein kann. Letztgenannte Einheit kann hydraulisch, pneumatisch oder hydropneumatisch betrieben sein. Dadurch ist in Klemmstellung eine symmetrische Beaufschlagung der Klemmleiste und damit eine Entlastung der dem Schlitten zugeordneten Linearlager durch Klemmkräfte stets gewährleistet.

Nachstehend wird eine bevorzugte Ausführungsform der erfindungsgemäßen Konstruktion anhand der beigefügten Zeichnung näher beschrieben. Es zeigen:

Fig. 1 eine erfindungsgemäße Vorrichtung in Zuordnung zu einem Reitstock einer Drehmaschine in schematischer Seitenansicht;

Fig. 2 die Vorrichtung nach Fig. 1 in Vorderansicht mit teilweise weggebrochenem Reitstockgehäuse;

Fig. 3 eine Einzelheit der Vorrichtung nach Fig. 1 bzw. 2 in Ansicht in vergrößertem Maßstab;

Fig. 4 eine Abwandlung des in Fig. 3 dargestellten Details der Vorrichtung;

Fig. 5 die Vorrichtung entsprechend der Darstellung nach Fig. 1 mit auskonstruierten Details, teilweise in Seitenansicht und teilweise im Schnitt.

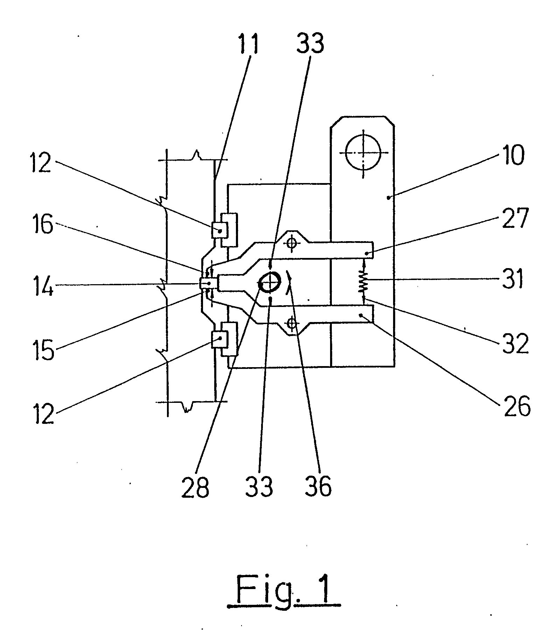

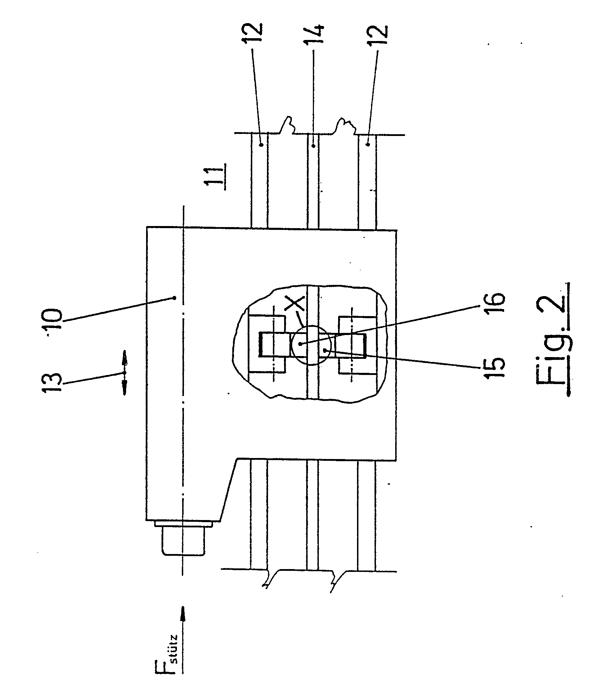

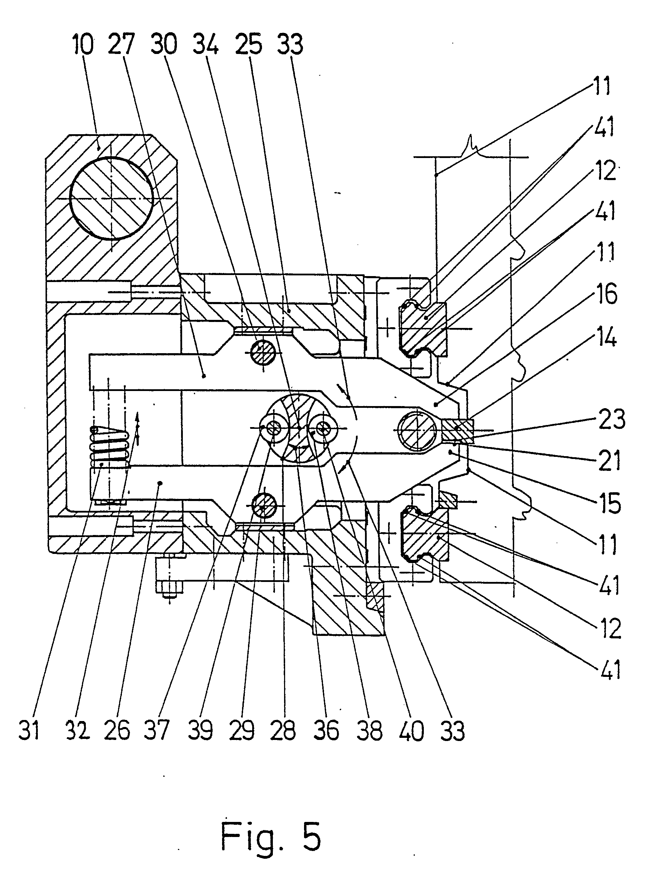

In den Fig. 1 und 2 ist mit der Bezugsziffer 10 ein Reitstock für eine im übrigen nicht näher dargestellte Drehmaschine gekennzeichnet. Der Reitstock 10 ist an einer aufrechten Wand 11 des Maschinenbetts abgestützt, und zwar über zwei im Abstand voneinander sich horizontal erstreckenden Linearführungen 12. Die Linearführungen 12 sollen Kugel-Linearführungen sein, wie anhand der Fig. 5 noch näher beschrieben wird.

Der Reitstock ist an den (Kugel-)Linearführungen 12 längsverschieblich gelagert, und zwar in Richtung des Doppelpfeiles 13 in Fig. 2.

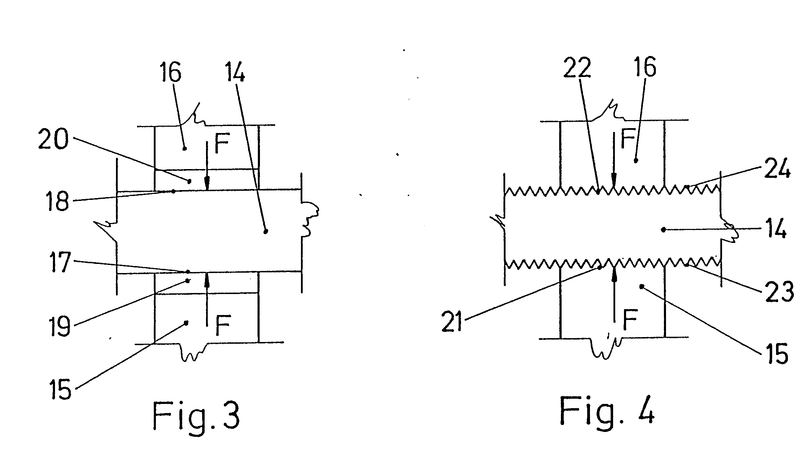

Zwischen den beiden Linearführungen 12 erstreckt sich parallel zu diesen eine Klemmleiste 14, die an der Bettwand 11 befestigt ist. Im Reitstock 10 sind zwei diametral wirksame Klemmbacken 15, 16 angeordnet, zwischen denen sich die Klemmleiste 14 hindurcherstreckt. Entsprechend Fig. 3 sind die wirksamen Klemmflächen 17, 18 der Klemmbacken 15, 16 jeweils mit einem Reitbelag 19, 20 versehen. Die Klemmung zwischen den Klemmbacken 15, 16 einerseits und der dazwischen angeordneten Klemmleiste 14 andererseits erfolgt bei dieser Ausführungsform kraftschlüssig.

Bei der Ausführungsform nach Fig. 4 sind die Klemmflächen der Klemmbacken 15, 16 jeweils mit einer Spitzverzahnung 21, 22 versehen, die mit einer komplementären Spitzverzahnung 23, 24 an den den Klemmbacken 15, 16 zugewandten Flächen der Klemmleiste 14 zusammenwirken. Bei dieser Ausführungsform erfolgt also die Klemmung zwischen den Klemmbacken 15, 16 einerseits und der dazwischen angeordneten Klemmleiste 14 andererseits form- und kraftschlüssig. Die durch die Klemmbacken 15, 16 auf die Klemmleiste 14 ausgeübten Klemmkräfte sind in den Fig. 1, 3 und 4 jeweils mit dem Buchstaben "F" gekennzeichnet.

Die Ausführungsform nach Fig. 3 ist für kleinere Bearbeitungs-und Pinolenkräfte bestimmt; die Ausführungsform nach Fig. 4 für größere Bearbeitungs- und Pinolenkräfte.

Wie die Fig. 1 und 5 am besten erkennen lassen, sind die Klemmbacken 15, 16 an einer Seite von im Reitstockgehäuse 25 schwenkbar gelagerten Doppelhebeln 26, 27 angeordnet bzw. ausgebildet. An der im Verhältnis zu den Schwenklagern 29, 30 der Doppelhebel 26, 27 im Reitstockgehäuse 25 anderen Seite der Doppelhebel ist ein beiden Doppelhebeln gemeinsames Vorspannelement in Form einer Schraubendruckfeder 31 vorgesehen, welches die Klemmbacken 15, 16 in Klemmstellung vorspannt bzw. in Klemmstellung hält. Dadurch, daß das Vorspannelement 31 beiden Doppelhebeln gemeinsam ist, erfolgt über das Vorspannelement ein Kraftausgleich, so daß die Klemmleiste durch die beiden diametral wirksamen Klemmbacken 15, 16 jeweils mit derselben Klemmkraft beaufschlagt werden. Dies bedeutet, daß die gesamte Klemmkraft ausschließlich in die Klemmleiste 14 eingeleitet wird und die (Kugel-)Linearlager 12 von Klemmkräften unbelastet sind. Das Vorspannelement 31 wirkt in Richtung des Doppelpfeiles 32. An der Klemmbackenseite der Doppelhebel 26, 27 ist zwischen diesen ein Spreizorgan 28 zugeordnet, mittels dem die Doppelhebel 26, 27 und damit die an diesen angeordneten Klemmbacken 15, 16 gegen die Wirkung des Vorspannelements 31 in Freigabestellung (Pfeile 33) bewegbar sind.

Das Spreizorgan 28 ist als Nockenglied ausgebildet, welches über eine aus dem Reitstockgehäuse 25 herausragende Achse 34 und einen an dieser angeschlossenen Betätigungshebel 35 aus einer Stellung, in welcher es entsprechend der Darstellung in Fig. 5 nicht auf die Doppelhebel 26, 27 einwirkt, in eine Spreiz- bzw. Klemmbacken-Freigabestellung und umgekehrt beweg-bar, nämlich drehbar ist. Die Verschwenkbarkeit des als Nokkenglied ausgebildeten Spreizorgans 28 um die Achse 34 ist in den Fig. 1 und 5 durch den Doppelpfeil 36 angedeutet. Wie Fig. 5 sehr gut erkennen läßt, weist das Nockenglied 28 zwei diametral vorstehende Nocken in Form von drehbar gelagerten Nockenrädern 37, 38 auf, deren Drehachsen 39, 40 sich jeweils parallel zur das Nockenglied 28 tragenden Betätigungsachse 34 erstrecken. Die drehbar gelagerten Nockenräder 37, 38 erleichtern das Öffnen der Klemmbacken 15, 16 in Richtung der Pfeile 33. Die Nockenräder 37, 38 wälzen sich an den einander zugewandten Seiten der Doppelhebel 26, 27 ab, und zwar im Bereich zwischen den Schwenklagern 29, 30 und den Klemmbacken 15, 16 unter gleichzeitiger Auseinanderbewegung derselben in Richtung der Pfeile 33.

Wie bereits oben dargelegt, handelt es sich bei den Linearlagern bzw. -führungen 12 um Kugel-Linearführungen. Die Lagerkugeln sind in Fig. 5 mit der Bezugsziffer 41 gekennzeichnet. Im übrigen handelt es sich bei den dargestellten Kugel-Linearführungen um herkömmliche Bauelemente, so daß eine nähere Beschreibung derselben an dieser Stelle entbehrlich ist.

Hervorzuheben wäre noch, daß bei der Ausführungsform nach Fig. 5 die Klemmfläche der unteren Klemmbacke 15 eine Spitzverzahnung 21 aufweist, die mit einer entsprechenden Spitzverzahnung 23 an der zugewandten Klemmfläche der Klemmleiste 14 zusammenwirkt. Die komplementären Klemmflächen der oberen Klemmbacke 16 sowie Klemmleiste 14 sind jeweils plan ausgebildet. Die Positionierung des Reitstocks 10 ist durch die komplementäre Spitzverzahnung 21, 23 der unteren Klemmbacke 15 sowie zugeordneten Seite der Klemmleiste 14 sichergestellt. Die obere Klemmbacke 16 dient lediglich zum oben beschriebenen Kraftausgleich derart, daß die Klemmkräfte ausschließlich in die Klemmleiste 14 angeleitet werden und somit die Kugel-Linearführungen 12 frei sind von Klemmkräften oder -momenten.

Die beschriebene Konstruktion eignet sich selbstverständlich nicht nur für Reitstöcke, sondern für längsverschieblich gelagerte Werkzeugmaschinen-Schlitten aller Art. Statt des manuell betätigbaren Betätigungshebels 35 kann eine pneumatische, hydraulische oder hydro-pneu-matisch betriebene Schwenkeinrichtung vorgese-hen sein. Eine solche kann auch am Beätigungshebel 35 einerseits und am Reitstockgehäuse 25 andererseits angelenkt sein. Als Schwenkeinrichtung dient insbesondere eine Kolben-Zylinder-Einheit. Im letztgenannten Fall ist die Kolbenstange z. B. am Betätigungshebel 35 und der zugeordnete Zylinder am Reitstockgehäuse 25 angelenkt. Zur exakten Steuerung der Kolben-Zylinder-Einheit ist diese vorzugsweise zwei-seitig beaufschlagbar.

Schließlich kann statt der Schraubendruckfeder 31 als Schwenk hebel-Vorspannelement auch eine Zugfeder oder ein pneumatisch, hydraulisch oder hydro-pneumatisch betriebenes Zugorgan vorgesehen sein. Dieses ist dann zwischen den Schwenkachsen 29, 30 einerseits und Klemmbacken 15, 16 andererseits wirksam.

Sämtliche in den Anmeldungsunterlagen be-schriebenen Merkmale werden als erfindungswe-sentlich beansprucht, soweit sie einzeln oder in Kombination gegenüber dem Stand der Technik neu sind.

Bezugszeichenliste:

10 Reitstock
11 Bettwand
12 (Kugel-)Linearführung
13 Doppelpfeil
14 Klemmleiste
15 Klemmbacke
16 Klemmbacke
17 Klemmfläche
18 Klemmfläche
19 Reibbelag
20 Reibbelag
21 Spitzverzahnung
22 Spitzverzahnung
23 Spitzverzahnung
24 Spitzverzahnung
25 Reitstockgehäuse
26 Doppelhebel
27 Doppelhebel
28 Spreizorgan
29 Schwenklager
30 Schwenklager
31 Schraubendruckfeder
32 Doppelpfeil
33 Pfeil
34 Achse
35 Betätigungshebel
36 Doppelpfeil
37 Nockenrad
38 Nockenrad
39 Drehachse
40 Drehachse
41 Lagerkugel
F Klemmkraft

**Ansprüche**

1. Vorrichtung zur klemmenden Fixierung eines in einer Werkzeugmaschine längsverschiebbar gelagerten Schlittens, insbesondere Reitstocks (10) einer Drehmaschine, an einer vorgegebenen Position, **gekennzeichnet durch** zwei dem Schlitten (10) zugeordnete diametral wirksame Klemmbacken (15, 16), zwischen denen sich eine parallel zur Linearführung (12) erstreckende Klemmleiste (14) hindurcherstreckt.

2. Vorrichtung nach Anspruch 1, **dadurch gekennzeichnet,** daß die Klemmflächen (17, 18) der Klemmbacken (15, 16) und/oder die den Klemmbacken (15, 16) zugewandten Klemmflächen der Klemmleiste (14) mit einem Reibbelag (19, 20) und/oder einer Verzahnung, insbesondere Spitzverzahnung, versehen sind.

3. Vorrichtung nach Anspruch 1 oder 2, **dadurch gekennzeichnet,** daß die Klemmbacken (15, 16) in Klemmstellung vorgespannt sind, insbesondere durch ein beiden Klemmbacken (15, 16) gemeinsames Vorspannelement (Schraubendruckfeder 31, hydraulisch, pneumatisch und/oder hydro-pneumatisch betätigte Kolben-Zylinder-Einheit).

4. Vorrichtung nach einem oder mehreren der Ansprüche 1 bis 3, **dadurch gekennzeichnet,** daß die Klemmbacken (15, 16) an im Schlitten (10) schwenkbar gelagerten Hebeln, insbesondere Doppelhebeln (26, 27), angeordnet sind, wobei den Hebeln (26, 27) ein Spreizorgan (28) zugeordnet ist, mittels dem die Hebel (26, 27) und damit die an diesen angeordneten Klemmbacken (15, 16) gegen die Wirkung des Vorspannelements (Schraubendruckfeder 31, etc.) in Öffnungs- bzw. Freigabestellung bewegbar sind.

5. Vorrichtung nach Anspruch 4, **dadurch gekennzeichnet,** daß bei Ausbildung der die Klemmbacken (15, 16) tragenden Schwenkhebel als Doppelhebel (26, 27) die Klemmbacken (15, 16) an der jeweils einen Seite der Schwenkachsen (29, 30) angeordnet und das Vorspannelement, z. B. in Form einer Schraubendruckfeder (31), an der jeweils anderen Seite der Schwenkachsen (29, 30) an den Doppelhebeln (26, 27) angreift.

6. Vorrichtung nach Anspruch 4 oder 5, **dadurch gekennzeichnet,** daß das den Schwenkhebeln (26, 27) zugeordnete Spreizorgan (28) ein Nockenglied umfaßt, welches über eine aus dem Schlittengehäuse (25) herausragende Achse (34) und einen an dieser an geschlossenen Betätigungshebel (35) aus einer Stellung, in welcher es unwirksam ist, in eine Schwenkhebel-Spreiz-bzw. Klemmbacken-Freigabestellung und umgekehrt bewegbar, insbesondere drehbar, ist.

7. Vorrichtung nach Anspruch 6, **dadurch gekennzeichnet,** daß das Nockenglied des Spreizorgans (28) diametral vorstehende Nokken, insbesondere in Form von drehbar gelagerten Nockenrädern (37, 38), aufweist, deren Drehachsen (39, 40) sich jeweils parallel zur das Nockenglied tragenden Betätigungsachse (34) erstrecken.

8. Vorrichtung nach einem oder mehreren der Ansprüche 3 bis 7, **dadurch gekennzeichnet,** daß das den beiden Klemmbacken gemeinsame Vorspannelement durch eine Zugfeder oder ein hydraulisch, pneumatisch oder hydro-pneumatisch betätigbares Zugorgan gebildet ist, welches zwischen den Klemmbacken (15, 16) einerseits und den Schwenklagern (29, 30) der die Klemmbacken (15, 16) tragenden Schwenkhebel andererseits an diesen angreift bzw. wirksam ist.

9. Verwendung der Vorrichtung nach einem oder mehreren der Ansprüche 1 bis 8 in Verbindung mit einem Schlitten (10), welcher längs eines Kugel-Linearlagers bzw. einer Kugel-Linearführung (12) verschiebbar angeordnet ist.

Fig. 1

$F_{stütz}$

13 10

11

12

X

14

12

15 16

EP 0 305 767 A2

Fig. 2

Fig.3

Fig. 4

EP 0 305 767 A2

Fig. 5